# EUROPÄISCHE PATENTSCHRIFT

(11) **EP 3 819 076 B1**
(45) Veröffentlichungstag und Bekanntmachung des Hinweises auf die Patenterteilung: **18.12.2024**
(21) Anmeldenummer: 20204928.4
(22) Anmeldetag: 30.10.2020
(51) Int. Cl.: B23Q 3/155, B23P 19/00, B23P 19/06, B27F 7/17, B27F 7/02, B27G 11/00, B27F 7/00, B23Q 1/01, B27M 3/00

(54) **WERKZEUGMASCHINE MIT WECHSELVORRICHTUNG FÜR BEFESTIGUNGSAGGREGATE**
MACHINE TOOL WITH CHANGE DEVICE FOR FIXING UNITS
MACHINE-OUTIL POURVU DE DISPOSITIF DE CHANGEMENT POUR MODULES DE FIXATION

(30) Priorität: 07.11.2019 DE 102019130059
(43) Veröffentlichungstag der Anmeldung: 12.05.2021
(73) Patentinhaber: Weinmann Holzbausystemtechnik GmbH, 72813 St. Johann (DE)
(72) Erfinder: Ott, Hansbert, 72805 Lichtenstein (DE)
(74) Vertreter: Kohler Schmid Möbus Patentanwälte

(56) Entgegenhaltungen:
- EP-A1- 1 849 571
- EP-A1- 2 143 524
- EP-A1- 3 296 056
- DE-A1- 4 301 217
- DE-U1- 202007 017 768
- HOECHSMANN: "Optimat I profi line I power line Multifunktionsbrücke WMS - die Brücke zum Erfolg WMS Multifunktions-Brücke", 31 December 2009 (2009-12-31), XP055788207, Retrieved from the Internet <URL:https://wtp.hoechsmann.com/de/lexikon/pdf/wen_wms_2009.pdf> [retrieved on 20210322]
- HOMAG: "fastenerSwitch | HOMAG", 22 March 2021 (2021-03-22), XP055788185, Retrieved from the Internet <URL:https://www.homag.com/produkte/innovationen/fastenerswitch> [retrieved on 20210322]
- WEINMANN: "Multitalent für den Holzbau", 22 March 2021 (2021-03-22), XP055788191, Retrieved from the Internet <URL:https://www.homag.com/fileadmin/product/houseconstruction/brochures/weinmann-multifunktionsbruecke-WALLTEQ-de.pdf> [retrieved on 20210322]
- MULTIFUNKTIONS-BRÜCKE WMS: "Multifunktionsbrücke WMSdie Brücke zum Erfolg", 31 December 2009 (2009-12-31), pages 1 - 9, XP093175607, Retrieved from the Internet <URL:hoechsmann.com/de/lexikon/pdf/wen_wms_2009.pdf> [retrieved on 20240617]
- SYSTEM DAS ET AL: "Optimat I profi line I power line Multifunktionsbrücke WMS - die Brücke zum Erfolg WMS Multifunktions-Brücke", 22 March 2021 (2021-03-22), XP055788207, Retrieved from the Internet <URL:https://wtp.hoechsmann.com/de/lexikon/pdf/wen_wms_2009.pdf> [retrieved on 20210322]
- MULTIFUNKTIONS-BRÜCKE WMS: "Multifunktionsbrücke WMSdie Brücke zum Erfolg", 31 December 2009 (2009-12-31), pages 1 - 9, XP093175607, Retrieved from the Internet <URL:https://wtp.hoechsmann.com/de/lexikon/pdf/wen_wms_2009.pdf> [retrieved on 20240617]
- ANONYMOUS: "WEINMANN WMS 100 - WOOD TEC PEDIA", 11 June 2009 (2009-06-11), pages 1 - 3, XP093175631, Retrieved from the Internet <URL:https://wtp.hoechsmann.com/de/lexikon/24314/wms_100> [retrieved on 20240617]

## Beschreibung

Die Erfindung betrifft eine Werkzeugmaschine mit mindestens einer Werkstückauflage und einem über die Werkstückauflage verfahrbaren Portal das mit verschiedenen Werkzeugen bestückt oder bestückbar ist.

Solche Werkzeugmaschinen sind vielfach bekannt, beispielsweise aus der europäischen Patentanmeldung EP 2 143 524 A1, und werden insbesondere auch zur Holzbearbeitung und für den Fertighausbau eingesetzt. Das Portal bildet eine Arbeitsbrücke, die linear über eine häufig tischförmig ausgebildete Werkstückauflage bewegbar ist. Am Portal sind verschiedene Werkzeuge angeordnet, die über einen Werkzeugwechsler in eine Arbeitsspindel der Maschine einwechselbar sind. Die Werkzeuge können längs der Brücke verfahren werden, sodass sie mit Hilfe der Brücke jeden Punkt in einer x-y-Ebene der Werkzeugauflage erreichen können. In der Regel sind über am Portal vorgesehene Mehrachsaggregate auch Winkeleinstellungen der Werkzeuge möglich. Typische Werkzeuge sind beispielsweise Sägen, Fräser oder Bohrer.

Diese Werkzeugmaschinen können auch zur Montage von Bauelementen eingesetzt werden. Es ist beispielsweise möglich, einen Holzrahmen herzustellen und plattenförmige Elemente wie Gipskarton- oder Holzplatten auf dem Rahmen zu befestigen. Als Befestigungsmittel werden vorzugsweise Nägel oder Klammern eingesetzt, die ebenfalls über das Portal in die Werkstücke eingebracht werden können. Dazu werden bislang von Hand die gewünschten Nagel- oder Klammergeräte am Portal befestigt und mit der Maschinensteuerung verbunden. Häufig werden beide Befestigungsmittel - Nägel und Klammern - zur Montage benötigt, was einen Austausch der Geräte am Portal während der Montage erfordert. Die dafür notwendigen Umrüstzeiten verlangsamen jedoch den Produktionsablauf. Andererseits können Nagel- und Klammergeräte nicht automatisch mit einem Werkzeugwechsler eingewechselt werden, da sie nicht mit der Arbeitsspindel der Maschine verbunden werden, sondern eigenständige Geräte darstellen. Diese Geräte weisen außerdem ein Magazin für die Befestigungsmittel auf und sind daher relativ schwer und voluminös, sodass eine permanente Anordnung verschiedener Befestigungsgeräte am Portal der Werkzeugmaschine ausscheidet.

Der vorliegenden Erfindung liegt die Aufgabe zugrunde, eine Werkzeugmaschine derart weiterzubilden, dass Umrüstzeiten für den Einsatz verschiedener Befestigungsaggregate stark verkürzt werden können.

Die Aufgabe wird gelöst durch eine Werkzeugmaschine mit mindestens einer Werkstückauflage und einem über die Werkstückauflage verfahrbaren Portal, das mit verschiedenen Werkzeugen bestückt oder bestückbar ist, die dadurch gekennzeichnet ist, dass ein Magazin für verschiedene Befestigungsaggregate wie Druckluft-Nagelgeräte, Klammergeräte ,Impuls-Nagelgeräte, Schrauber, Klebe- oder Leimauftragsgeräte vorgesehen ist, wobei die Befestigungsaggregate jeweils in Haltern im Magazin gelagert sind, und am Portal mindestens eine Aufnahmestation für einen Halter eines Befestigungsaggregats vorgesehen ist und die Aufnahmestation mit Hilfe des Portals über einen ausgewählten Halter im Magazin verfahrbar und in z-Richtung absenkbar ist, sodass an dem Halter für das Befestigungsaggregat und an der Aufnahmestation vorgesehene Kopplungseinrichtungen miteinander verbindbar sind.

Die verschiedenen, für die Montage von Bauteilen vorgesehenen Befestigungsaggregate können in dem Magazin vorgehalten werden. Das Portal holt sich dann automatisch jeweils nur dasjenige Befestigungsaggregat, das für den jeweiligen Montageschritt notwendig ist. Es ist weder ein Umrüsten von Hand erforderlich noch das Mitbewegen mehrerer, unterschiedlicher Befestigungsaggregate mit dem Portal, was aufgrund des Gewichts dieser Geräte die Arbeitsgeschwindigkeit des Portals deutlich reduzieren würde. Außerdem kann das Portal schmaler gebaut werden, als wenn die Befestigungsaggregate mit am Portal gelagert würden.

Das Magazin für die Befestigungsaggregate kann so angeordnet werden, dass die Halter mit den Befestigungsaggregaten für das Bedienpersonal der Maschine gut zugänglich sind. Dadurch lassen sich nicht nur die Aggregate ohne Unterbrechung der Maschinentätigkeit austauschen, sondern auch die Befestigungsmittel-Vorratsbehälter der Aggregate ohne Maschinenstopp nachfüllen.

Durch die Verwendung standardisierter Halter für die verschiedenen Befestigungsaggregate können außerdem handelsübliche Kopplungssysteme zum Verbinden der Halter mit der Aufnahmestation eingesetzt werden.

Bei einer bevorzugten Ausgestaltung der Maschine ist eine Wechselstation am Magazin vorgesehen, wobei die Wechselstation mindestens eine Kopplungseinrichtung zum Koppeln mit einem Halter eines Befestigungsaggregats und Anheben desselben in z-Richtung und übergeben an eine Aufnahmestation aufweist. Hier übernimmt die Wechselstation die Auswahl des gewünschten Befestigungsaggregats und stellt dieses der Aufnahmestation zur Übernahme bereit. Durch das Anheben des Halters durch die Wechselstation ergeben sich mehr Anordnungsmöglichkeiten für das Magazin. Bei einer Werkzeugmaschine mit zwei Auflagetischen als Werkzeugauflagen kann so das Magazin beispielsweise zwischen den Tischen und unterhalb der durch die Tischoberflächen definierten Ebene angeordnet werden.

Weitere entscheidende Vorteile können erzielt werden, wenn die Kopplungseinrichtung der Aufnahmestation oder die Aufnahmestation selbst um eine vertikale Achse drehbar und/oder um eine horizontale Achse schwenkbar angeordnet ist. Dadurch lassen sich die Befestigungsmittel in unterschiedlichen Winkeln in die Werkstücke eintreiben. Dies ist insbesondere bei Werkstücken aus Holz von Bedeutung, da Holz eine Faserrichtung aufweist und Befestigungsmittel wie Nägel, Klammern oder Schrauben möglichst nicht parallel, sondern quer zu dieser Faserrichtung eingebracht werden sollten, um eine sichere Befestigung zu erreichen.

Ist eine Wechselstation am Magazin vorgesehen, so kann diese vorzugsweise seitlich an den Haltern für die Befestigungsaggregate ankoppeln und diese anschließend in z-Richtung anheben. Dadurch kann eine weitere Kopplungsstelle an der Oberseite der Halter zur Verbindung mit den Kopplungselementen der Aufnahmestation vorgesehen werden.

Die Befestigungsaggregate der erfindungsgemäßen Werkzeugmaschine können insbesondere zur Befestigung von plattenförmigen Werkstücken an einer auf der Werkstückauflage aufliegenden Holzrahmenkonstruktion eingesetzt werden. Dabei kann das Portal in einer x-Richtung über die Werkstückauflage verfahrbar sein und die Befestigungsaggregate mit Hilfe der Aufnahmestation in einer y-Richtung längs des Portals bewegbar sein, sodass die Befestigungsmittel an jeder beliebigen Stelle in einer x-y-Ebene platziert werden können.

Insbesondere für das Befestigen plattenförmiger Werkstücke an einer Unterkonstruktion ist es weiter von Vorteil, wenn die Halter für die Befestigungsaggregate an ihrer Unterseite mit Rollen oder Gleitplatten versehen sind. Mit Hilfe der Rollen oder Gleitplatten der Halter können die Befestigungsaggregate über die Oberfläche der plattenförmigen Werkstücke an die gewünschten Positionen gefahren werden. Während des Eintreibens, Einschraubens oder Einschießens der Befestigungselemente halten die Rollen oder Gleitplatten außerdem die plattenförmigen Elemente nieder und in Position. Wenn die Befestigungsaggregate, vorzugsweise beim Einkoppeln in die Aufnahmestation, über Steuerleitungen mit einer Steuerung der Werkzeugmaschine verbindbar sind, können die Befestigungsmittel in jeder gewünschten Position und in beliebigem Abstand und Winkel zueinander in die Werkstücke eingebracht werden.

Die Anwendung der Werkzeugmaschine ist jedoch keineswegs auf das Befestigen plattenförmiger Werkstücke beschränkt. Bei der Maschine kann in an sich bekannter Weise ein Werkzeugwechsler an dem Portal vorgesehen sein, mit dem verschiedene Werkzeuge mit dem Portal verbindbar sind. Die Werkzeuge können beispielsweise Sägen, Fräser oder Bohrer sein, sodass die Maschine auch Holzbalken ablängen, anfasen und mit Bohrungen versehen kann. Auch Werkstücke, die nicht aus Holz sind, können mit der Maschine bearbeitet werden.

Weiter ist es möglich, mit der mindestens einen Aufnahmestation des Portals auch in Haltern gelagerte Markierungsgeräte aufzunehmen.

Im Folgenden werden die für die Erfindung wesentlichen Elemente eines Ausführungsbeispiels einer erfindungsgemäßen Werkzeugmaschine mit Bezug auf die Zeichnung näher beschrieben.

Es zeigen:
- Fig. 1: eine perspektivische Ansicht eines Magazins für Befestigungsaggregate einer Werkzeugmaschine;
- Fig. 2: eine perspektivische Teilansicht eines Portals einer Werkzeugmaschine mit Aufnahmestationen für Befestigungsaggregate.

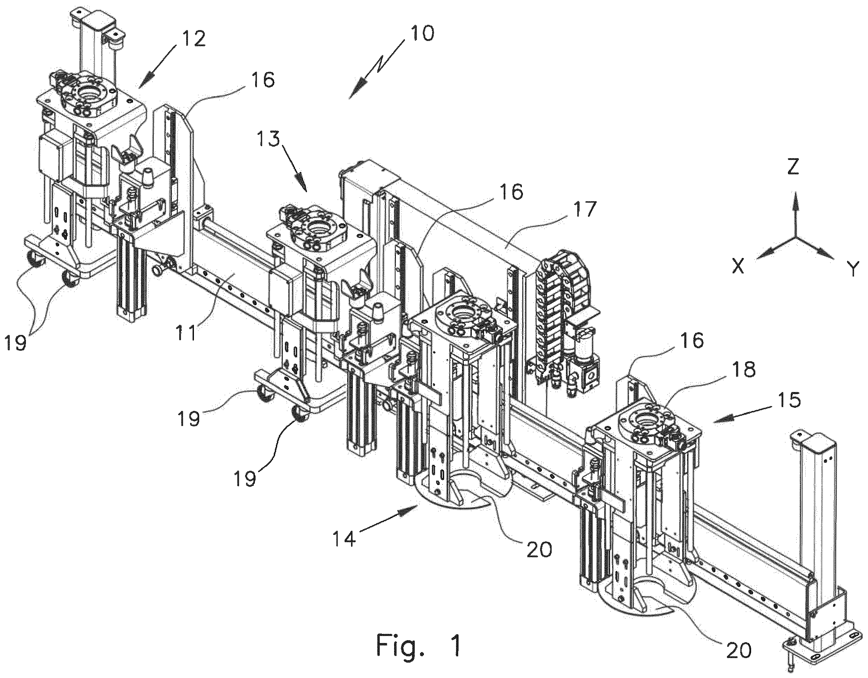

In Fig. 1 ist ein Magazin 10 für hier nicht näher dargestellte Befestigungsaggregate wie Klammer- oder Nagelgeräte dargestellt. Das Magazin 10 weist eine Schiene 11 auf, die an einer nicht weiter gezeigten Werkzeugmaschine oder benachbart zu dieser befestigt ist. An der Schiene 11 sind mehrere Halter 12, 13, 14 und 15 für die Befestigungsaggregate längs verschiebbar angeordnet. Die Halter 12 - 15 sind jeweils auf ihren der Schiene 11 zugewandten Seiten mit Kopplungseinrichtungen 16 verbunden bzw. verbindbar. An diesen Kopplungseinrichtungen kann eine Wechselstation 17 angreifen und einen oder zwei der Halter 12 - 15 in z-Richtung anheben. Zur Auswahl des oder der Halter 12 - 15 mit dem oder den gewünschten Befestigungsaggregaten kann die Wechselstation 17 ebenfalls entlang der Schiene 11 mittels einer Maschinensteuerung verfahren werden.

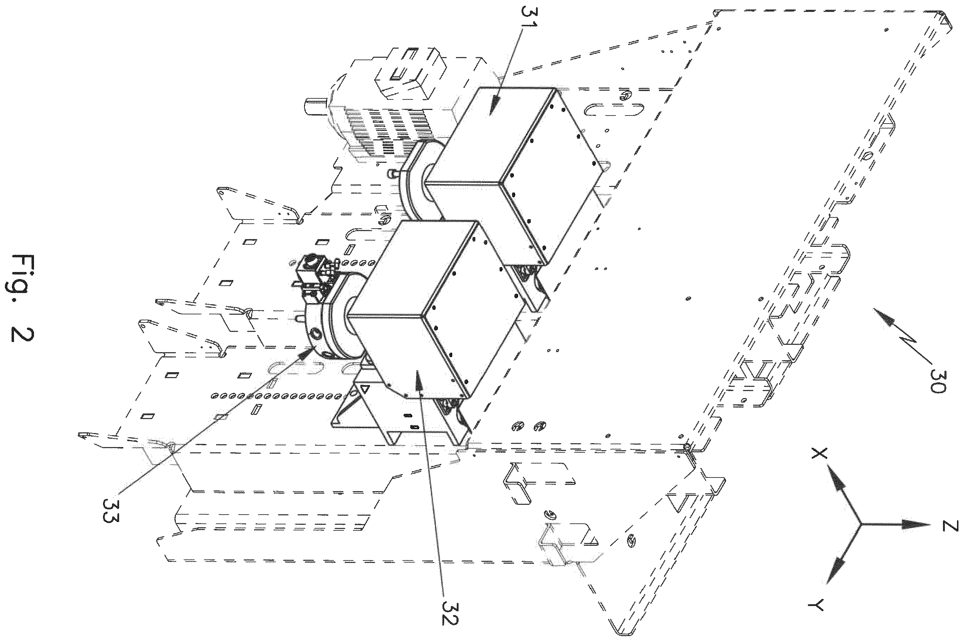

Die Halter 12 - 15 weisen auf ihren Oberseiten weitere standardisierte Kopplungseinrichtungen 18 auf, mit deren Hilfe sie mit einem in Fig. 2 dargestellten Portal 30 einer Werkzeugmaschine verbunden werden können.

Die Halter 12 und 13 sind auf ihrer Unterseite mit Rollen 19 versehen, während die Halter 14 und 15 an ihrer Unterseite jeweils eine Gleitplatte 20 aufweisen. Mit Hilfe der Rollen 19 und der Gleitplatten 20 können die Halter 12 - 15 über die Oberfläche von plattenförmigen Werkstücken (nicht dargestellt) bewegt werden, um diese Werkstücke an mehreren Stellen mit Hilfe von Befestigungsmitteln wie Klammern oder Nägeln mit einer Unterkonstruktion verbinden zu können. Gleitplatten 20 werden dann eingesetzt, wenn die plattenförmigen Werkstücke eine relative weiche und empfindliche Oberfläche aufweisen, sodass Rollen 19 Fahrspuren hinterlassen würden.

Fig. 2 zeigt einen Ausschnitt eines Portals 30 der Werkzeugmaschine. Am Portal 30 sind zwei in y-Richtung entlang des Portals 30 verfahrbare Aufnahmestationen 31, 32 für Halter 12 - 15 für Befestigungsaggregate angeordnet. Die Aufnahmestationen 31, 32 können in z-Richtung abgesenkt werden, um zwei von der Wechselstation 17 ausgewählte und angehobene Halter 12 - 15 aufnehmen zu können. Dazu sind die Aufnahmestationen 31, 32 auf ihrer Unterseite jeweils mit einer Standard-Koppelungseinrichtung 33 versehen, die mit den Kopplungseinrichtungen 18 an den Haltern 12 - 15 in Eingriff gebracht werden können. Die Kopplungseinrichtungen 33 sind dabei um eine vertikale Achse drehbar an den Aufnahmestationen 31, 32 gelagert, wodurch der Befestigungswinkel der Befestigungsmittel wie Klammern eingestellt werden kann. Durch die Verschiebbarkeit der Aufnahmestationen am Portal 30 in y-Richtung und der Verfahrbarkeit des gesamten Portals 30 in x-Richtung können an den Aufnahmestationen 31, 32 angeordnete Befestigungsaggregate jeden Punkt in einer x-y-Ebene einer hier nicht dargestellten Werkstückauflage erreichen.

## Patentansprüche

1. Werkzeugmaschine mit mindestens einer Werkstückauflage und einem über die Werkstückauflage verfahrbaren Portal (30), das mit verschiedenen Werkzeugen bestückt oder bestückbar ist, **dadurch gekennzeichnet, dass** ein Magazin (10) für verschiedene Befestigungsaggregate wie Druckluft-Nagelgeräte, Klammergeräte, Impuls-Nagelgeräte, Schrauber, Klebe- oder Leimauftragsgeräte vorgesehen ist, wobei die Befestigungsaggregate jeweils in mit einer Kopplungseinrichtung (18) versehenen Haltern (12 - 15) im Magazin (10) gelagert sind, und am Portal (30) mindestens eine Aufnahmestation (31, 32) mit einer Kopplungseinrichtung (33) für einen Halter (12 - 15) eines Befestigungsaggregats vorgesehen ist und die Aufnahmestation (31, 32) mit Hilfe des Portals (30) über einen ausgewählten Halter (12 - 15) im Magazin (10) verfahrbar und in
z-Richtung absenkbar ist, wodurch die an dem Halter (12 - 15) für das Befestigungsaggregat und an der Aufnahmestation (31, 32) vorgesehenen Kopplungseinrichtungen (18, 33) miteinanderverbunden werden.

2. Werkzeugmaschine nach Anspruch 1, **dadurch gekennzeichnet, dass** eine Wechselstation (17) am Magazin (10) vorgesehen ist, wobei die Wechselstation (17) mindestens eine Kopplungseinrichtung (16) für einen Halter (12 - 15) eines Befestigungsaggregats aufweist und das Befestigungsaggregat mit der Wechselstation (17) in z-Richtung anhebbar und an eine Aufnahmestation (31, 32) übergebbar ist.

3. Werkzeugmaschine nach Anspruch 1 oder 2, **dadurch gekennzeichnet, dass** die Kopplungseinrichtung (33) der Aufnahmestation (31, 32) oder die Aufnahmestation (31, 32) selbst um eine vertikale Achse drehbar und/oder um eine horizontale Achse schwenkbar angeordnet ist.

4. Werkzeugmaschine nach Anspruch 2 oder 3, **dadurch gekennzeichnet, dass** die Wechselstation (17) seitlich an dem oder den Haltern (12 - 15) für die Befestigungsaggregate ankoppelt.

5. Werkzeugmaschine nach einem der vorhergehenden Ansprüche, **dadurch gekennzeichnet, dass** mit den Befestigungsaggregaten insbesondere plattenförmige Werkstücke auf einer auf der Werkstückauflage aufliegenden Holzrahmenkonstruktion befestigbar sind.

6. Werkzeugmaschine nach einem der vorhergehenden Ansprüche, **dadurch gekennzeichnet, dass** die Halter (12 - 15) für die Befestigungsaggregate an ihrer Unterseite mit Rollen (19) oder Gleitplatten (20) versehen sind.

7. Werkzeugmaschine nach einem der vorhergehenden Ansprüche, **dadurch gekennzeichnet, dass** das Portal (30) in einer x-Richtung über die Werkstückauflage verfahrbar ist und die Befestigungsaggregate mit Hilfe der Aufnahmestation (31, 32) in einer y-Richtung längs des Portals (30) bewegbar sind.

8. Werkzeugmaschine nach einem der vorhergehenden Ansprüche, **dadurch gekennzeichnet, dass** die Befestigungsaggregate über Steuerleitungen mit einer Steuerung der Werkzeugmaschine verbunden sind.

9. Werkzeugmaschine nach einem der vorhergehenden Ansprüche, **dadurch gekennzeichnet, dass** mit der mindestens einen Aufnahmestation (31, 32) des Portals (30) auch in Haltern (12-15) gelagerte Markierungsgeräte aufnehmbar sind.

10. Werkzeugmaschine nach einem der vorhergehenden Ansprüche, **dadurch gekennzeichnet, dass** ein Werkzeugwechsler an dem Portal (30) vorgesehen ist.

## Claims

1. Machine tool comprising at least one workpiece support and a portal (30) which can be moved over the workpiece support and which is or can be equipped with various tools, **characterized in that** a magazine (10) is provided for various fastening units such as pneumatic nailers, staplers, impulse nailers, screwdrivers, and adhesive or glue application units, the fastening units each being stored in holders (12 - 15) in the magazine (10) which are provided with a coupling device (18), and at least one receiving station (31, 32) having a coupling device (33) for a holder (12 - 15) of a fastening unit is provided on the portal (30), and the receiving station (31, 32) can be moved with the aid of the portal (30) over a selected holder (12 - 15) in the magazine (10) and can be lowered in the z direction, as a result of which the coupling devices (18, 33) provided on the holder (12 - 15) for the fastening unit and on the receiving station (31, 32) are connected to one another.

2. Machine tool according to claim 1, **characterized in that** a changing station (17) is provided on the magazine (10), the changing station (17) having at least one coupling device (16) for a holder (12 - 15) of a fastening unit and it being possible for the fastening unit to be lifted in the z direction with the changing station (17) and transferred to a receiving station (31, 32).

3. Machine tool according to claim 1 or 2, **characterized in that** the coupling device (33) of the receiving station (31, 32) or the receiving station (31, 32) itself is arranged so as to be rotatable about a vertical axis and/or pivotable about a horizontal axis.

4. Machine tool according to claim 2 or 3, **characterized in that** the changing station (17) is coupled laterally to the holder or holders (12 - 15) for the fastening units.

5. Machine tool according to any one of the preceding claims, **characterized in that** the fastening units can be used to fasten in particular planar workpieces to a wooden frame structure resting on the workpiece support.

6. Machine tool according to any one of the preceding claims,
**characterized in that** the holders (12 - 15) for the fastening units are provided with rollers (19) or sliding plates (20) on their underside.

7. Machine tool according to any one of the preceding claims,
**characterized in that** the portal (30) can be moved in an x direction over the workpiece support and the fastening units can be moved in a y direction along the portal (30) with the aid of the receiving station (31, 32).

8. Machine tool according to any one of the preceding claims,
**characterized in that** the fastening units are connected to a control of the machine tool via control lines.

9. Machine tool according to any one of the preceding claims,
**characterized in that** the at least one receiving station (31, 32) of the portal (30) can also be used to receive marking units stored in holders (12-15).

10. Machine tool according to any one of the preceding claims,
**characterized in that** a tool changer is provided on the portal (30).

## Revendications

1. Machine-outil comportant au moins un support pour pièces et un portique (30) pouvant être déplacé au-dessus du support pour pièces et équipé ou pouvant être équipé de différents outils, **caractérisée en ce qu'**un magasin (10) est prévu pour différents groupes de fixation tels que des appareils de clouage à air comprimé, des appareils d'agrafage, des appareils de clouage à impulsions, des visseuses, des appareils de collage ou d'encollage, dans laquelle les groupes de fixation sont respectivement montés dans des moyens de maintien (12 - 15) pourvus d'un dispositif d'accouplement (18) dans le magasin (10), et au moins un poste de réception (31, 32) comportant un dispositif d'accouplement (33) pour un moyen de maintien (12 - 15) d'un groupe de fixation est prévu sur le portique (30) et le poste de réception (31, 32) peut être déplacé à l'aide du portique (30) au-dessus d'un moyen de maintien (12 - 15) sélectionné dans le magasin (10) et peut être abaissé dans la direction z, moyennant quoi les dispositifs d'accouplement (18, 33) prévus sur le moyen de maintien (12 - 15) pour le groupe de fixation et sur le poste de réception (31, 32) sont reliés entre eux.

2. Machine-outil selon la revendication 1, **caractérisée en ce qu'**un poste de changement (17) est prévu sur le magasin (10), dans laquelle le poste de changement (17) présente au moins un dispositif d'accouplement (16) pour un moyen de maintien (12 - 15) d'un groupe de fixation et le groupe de fixation peut être soulevé avec le poste de changement (17) dans la direction z et transféré à un poste de réception (31, 32).

3. Machine-outil selon la revendication 1 ou 2, **caractérisée en ce que** le dispositif d'accouplement (33) du poste de réception (31, 32) ou le poste de réception (31, 32) lui-même est disposé de manière à pouvoir tourner autour d'un axe vertical et/ou pivoter autour d'un axe horizontal.

4. Machine-outil selon la revendication 2 ou 3, **caractérisée en ce que** le poste de changement (17) s'accouple latéralement au ou aux moyens de maintien (12 - 15) pour les groupes de fixation.

5. Machine-outil selon l'une des revendications précédentes,
**caractérisée en ce que,** au moyen des groupes de fixation, en particulier des pièces en forme de plaques peuvent être fixées sur une construction à cadre en bois reposant sur le support pour pièces.

6. Machine-outil selon l'une des revendications précédentes,
**caractérisée en ce que** les moyens de maintien (12 - 15) pour les groupes de fixation sont pourvus de galets (19) ou de plaques de glissement (20) sur leur face inférieure.

7. Machine-outil selon l'une des revendications précédentes,
**caractérisée en ce que** le portique (30) peut être déplacé dans une direction x au-dessus du support pour pièces et les groupes de fixation sont mobiles dans une direction y le long du portique (30) à l'aide du poste de réception (31, 32).

8. Machine-outil selon l'une des revendications précédentes,
**caractérisée en ce que** les groupes de fixation sont reliés à une commande de la machine-outil par l'intermédiaire de lignes de commande.

9. Machine-outil selon l'une des revendications précédentes,
**caractérisée en ce que,** au moyen de l'au moins un poste de réception (31, 32) du portique (30), des appareils de marquage montés dans des moyens de maintien (12 - 15) peuvent également être reçus.

10. Machine-outil selon l'une des revendications précédentes,
**caractérisée en ce qu'**un changeur d'outils est prévu sur le portique (30).
